# EUROPÄISCHE PATENTSCHRIFT

(11) **EP 1 095 591 B1**
(45) Veröffentlichungstag und Bekanntmachung des Hinweises auf die Patenterteilung: **10.09.2003**
(21) Anmeldenummer: 00122942.6
(22) Anmeldetag: 21.10.2000
(51) Int. Cl.: A46B 15/00

(54) **Zahnputz-Vorrichtung zum Putzen der Zahn-Zwischenräume**
Cleaning device for interdental spaces
Dispositif pour le nettoyage des espaces interdentaires

(30) Priorität: 25.10.1999 DE 19951227
(43) Veröffentlichungstag der Anmeldung: 02.05.2001
(73) Patentinhaber: Jabbusch, Wolfgang, Dr., 26131 Oldenburg (DE)
(72) Erfinder: Jabbusch, Wolfgang, Dr., 26131 Oldenburg (DE)

(56) Entgegenhaltungen:
- GB-A- 191 846
- US-A- 1 624 054
- US-A- 4 237 911

## Beschreibung

Die Erfindung betrifft ein an einem Halteteil auswechselbar anzuordnendes Membrane-Element mit einer Putzmembrane zum Putzen der Zahn-Zwischenräume.

Das Putzen der Zahn-Zwischenräume ist schwierig, weil die Zwischenräume zwischen den Zähnen sehr schmal und für die Borsten normaler Zahnbürsten nicht zugängig sind. Spezialbürsten für die Zahn-Zwischenräume weisen nach Art von Flaschenreinigern sehr kurze Borsten auf, die zwischen zwei miteinander verdrillten Drähten gehalten werden. Zwangsläufig ist aufgrund der verdrillten Drähte bei diesen Spezialbürsten ein Durchmesser gegeben, der zumeist für Zahn-Zwischenräume zu groß ist. Aus diesen Gründen wird zum Putzen der Zahn-Zwischenräume sogenannte Zahnseide verwendet, die als flauschiger Faden ausgebildet ist. Das Putzen mit Zahnseide ist jedoch zumindest dann, wenn sie mit den Fingern gehalten wird, kompliziert. Dies unter anderem deshalb, weil während des Putzens von Zahn zu Zahn die Position der Zahnseide geändert werden muß, was mit den Fingern nicht leicht zu handhaben ist. Es gibt deshalb für die Zahnseide auch Spann-Halterungen, zwischen deren Enden ein Abschnitt der Zahnseide straff gehalten wird. Die Verwendung von Zahnseide weist aber den grundsätzlichen Mangel auf, daß die Zahnseide beim Putzen die Zahnoberfläche jeweils nur linienförmig berührt, so daß die Zahn-Zwischenräume entweder nicht gründlich genug gereinigt werden oder ein unverhältnismäßig großer Zeitaufwand erforderlich ist.

US 1 624 054 zeigt eine Zahnputzvorrichtung gemäß dem Oberbegriff des Anspruchs 1.

Der Erfindung liegt die Aufgabe zugrunde, eine Zahnputzvorrichtung zum Putzen der Zahn-Zwischenräume zu schaffen, welche die vorgenannten Nachteile nicht aufweist.

Diese Aufgabe ist erfindungsgemäß dadurch gelöst worden, daß deren Querränder zu Versteifungsstützen ausgeformt sind, die vorzugsweise rechtwinklig zur Basis verlaufen und in diese übergehen.

Das erfindungsgemäß ausgebildete Membrane-Element der Vorrichtung kann mit den heute zur Verfügung stehenden Materialien, insbesondere Kunststoffmaterialien, eine Putzmembrane erhalten, die so dünn ausgeführt ist, wie die Zahnseide. Die Putzmembrane kann dann auch in schmalste Zahn-Zwischenräume eingeführt werden. Gegenüber der Zahnseide bietet die Putzmembrane den Vorteil, daß gleichzeitig große Bereiche der die Zwischenräume begrenzenden Zahnoberflächen erfaßt und geputzt werden. Das beschleunigt das Putzen der Zahn-Zwischenräume erheblich. Putzmembrane, Versteifungsstützen und Basis bilden ein Membrane-Element, das, vorzugsweise als ein Kunststoffteil, sehr kostengünstig herstellbar und somit nach jedem Zähneputzen auswechselbar ist.

Nach Weiterbildungen der Erfindung können die Oberflächen der Putzmembrane angerauht sein oder mit einem Putzmittel beschichtet sein. Vorzugsweise wird die Putzmembrane aus einem steif-elastischen Stoff, vorzugsweise Kunststoff, gefertigt sein. Die Putzmembrane ist dann einerseits so steif, daß sie in die Zahn-Zwischenräume eingeführt werden kann und in den Zahn-Zwischenräumen ohne weiteres hin- und herbewegt werden kann. Andererseits ist eine solche Putzmembrane so elastisch, daß sie sich, je nach Druckanwendung, nacheinander an die Wölbungen zweier einen Zahn-Zwischenraum bildenden Zähne anlegt, wodurch große Oberflächenbereiche der Zähne erfaßt und gereinigt werden. Der beim Putzen dem Zahnfleisch zugewandte freie Rand der Putzmembrane kann einen elastischen Wulst aufweisen oder durch Ausnehmungen, Einschnitte oder dergleichen so geschwächt sein, daß er das Zahnfleisch nicht angreift.

Die Putzmembrane wird mit einem Längsrand an einem Halteteil vorzugsweise auswechselbar angeordnet. Zum Zwecke des Auswechselns weist die Putzmembrane an dem einen Längsrand eine verdickte Basis auf, mit dem sie in den Halteteil einrastbar ist. Dazu kann der Halteteil eine Einrastnut aufweisen. Nach einer Weiterbildung weist der Halteteil eine Einschiebenut mit einem dahinter liegenden erweiterten Nutkanal auf, in den das Putzelement mit seiner Basis einschiebbar ist. In diesen Nutkanal kann das Membrane-Element für die Dauer der Benutzung verrastbar sein.

Eine weitere Ausbildung der Erfindung kann derart sein, daß der Halteteil mit einem Griffteil verbunden ist, an dem er nach rechts und links schwenkbar gelagert und in der jeweils eingenommenen Winkelstellung verrastbar ist. Damit kann der Halteteil zum Putzen der Zwischenräume zwischen den Backenzähnen gegenüber dem Griffteil um beispielsweise 90° zur Seite geschwenkt werden, wodurch die Benutzung der Putzmembrane erleichtert wird.

Ausführungsbeispiele der Erfindung sind in der Zeichnung dargestellt. Es zeigen:
- Fig. 1: eine Draufsicht auf die Zahnputz-Vorrichtung,
- Fig. 2: eine Seitenansicht der Vorrichtung gemäß Fig. 1,
- Fig. 3: eine Benutzungssituation mit der Vorrichtung gemäß Fig. 1 und 2,
- Fig. 4: eine perspektivische Ansicht des Membrane-Elements der Vorrichtung,
- Fig. 5: einen perspektivischen Schnitt 1 längs der Linie V - V in Fig. 1,
- Fig. 6: eine andere Ausbildung des Membrane-Elements,
- Fig. 7: eine Draufsicht auf das Membrane-Element gemäß Fig. 6 und
- Fig. 8: eine weitere Ausbildung des Membrane-Elements

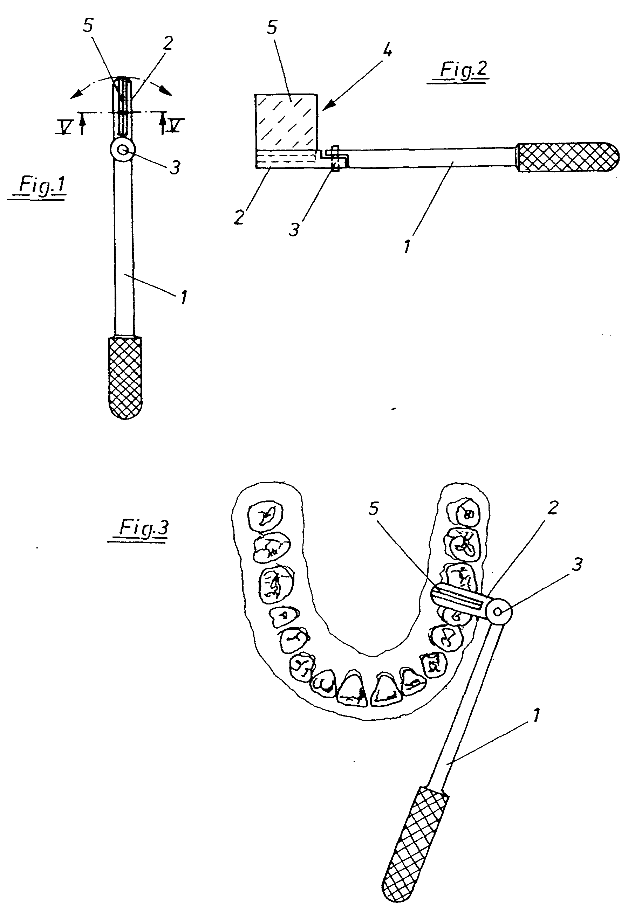

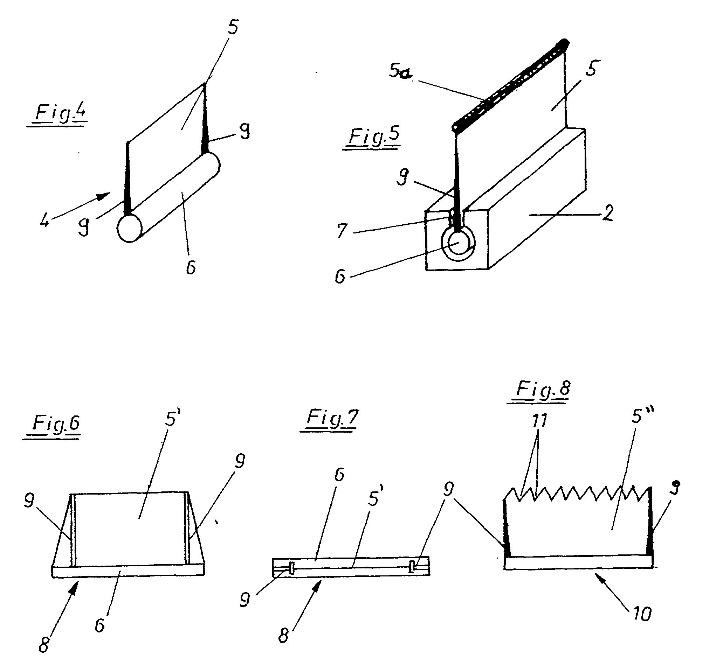

Die Zahnputz-Vorrichtung gemäß Fig. 1 bis 3 hat einen Griffteil 1 und einen relativ kurzen Halteteil 2, die über ein Schwenklager 3 miteinander verbunden sind. Das Schwenklager ist so ausgebildet, daß der Halteteil 2 gegenüber dem Griffteil 1 nach rechts und links verschwenkt werden kann. Im Schwenklager 3 sind nicht eingezeichnete Verrastungen vorgesehen, die den Halteteil 2 in der jeweils gewählten Schwenkstellung gegenüber dem Griffteil 1 verrasten. In dem Halteteil 2 ist ein Membrane-Element 4 auswechselbar angeordnet. Wie insbesondere aus Fig. 4 ersichtlich, hat das Membrane-Element 4 eine sehr dünnwandige Putzmembrane 5, die aus elastischem Material, vorzugsweise aus einem steif-elastischen Kunststoff gefertigt ist. Auf ihrer einen Längsseite ist die Putzmembrane 5 mit einer im Ausführungsbeispiel rund ausgeführten Basis 6 verbunden, wobei die Putzmembrane 5 und die Basis 6 herstellungsmäßig vorzugsweise aus einem Stück bestehen. Die Querränder der Putzmembrane 5 sind zu im Querschnitt dickeren Versteifungsstützen 9 ausgeformt, die rechtwinklig zur Basis verlaufen und in diese übergehen, also herstellungsmäßig mit dieser vorzugsweise auch aus einem Stück bestehen. Dabei sind die Versteifungsstützen elastisch-biegsam. Die Versteifungsstützen 9 stellen sicher, daß die sehr dünn ausgeführte Putzmembrane 5 elastisch-straff gehalten wird. Bevorzugt sind damit die Putzmembrane, die Versteifungsstützen und die Basis aus einem Material ausgeformt, beispielsweise in einem Kunststoffspritzvorgang hergestellt.

Wie insbesondere aus Fig. 5 ersichtlich, weist der Halteteil 2 eine in Längsrichtung verlaufende Einschiebenut 7 auf, deren Nutkanal innen kreisförmig hinterschnitten ist. In die Einschiebenut 7 mit Nutkanal ist das Membrane-Element 4 mit seiner Basis 6 einschiebbar. Es können lösbare Verrastungen vorgesehen sein, die sicherstellen, daß das Membrane-Element 4 nach Einschieben in den Halteteil 2 festgehalten wird, bis die Verrastung wieder aufgehoben wird.

Fig. 3 zeigt die Zahnputz-Vorrichtung beim Putzen des Zwischenraumes zwischen zwei Backenzähnen. Dazu ist der Halteteil 2 gegenüber dem Griffteil 1 um ca. 90° zur Seite geschwenkt. Die Putzmembrane 5 ist in dem Zwischenraum zwischen den beiden Backenzähnen von oben her eingeschoben. Durch hin und her bewegen des Halteteils 2 mit Hilfe des Griffteils 1 reinigt die Putzmembrane 5 die Oberflächen der beiden Backenzähne im Bereich des zwischen den Zähnen ausgebildeten Zahn-Zwischenraumes.

Die Putzmembrane 5 des Membrane-Elements 4 kann aus sehr dünnem aber gleichwohl relativ steifem Kunststoffmaterial gefertigt sein. Für sehr eng stehende Zähne wird es darauf ankommen, die Putzmembrane so dünn wie möglich auszuführen, damit sie gleichwohl in die dann sehr engen Zahn-Zwischenräume eingeführt werden kann.

Bei dem leicht abgeänderten Membrane-Element 8 nach Fig. 6 und 7 ist die Putzmembrane 5' mit Versteifungsstützen 9 verbunden, die im Querschnitt T-förmig ausgebildet sind.

Fig. 8 zeigt eine Ausbildung des Membrane-Elements 10, bei dem die Putzmembrane 5'' an ihrem freien Rand Ausnehmungen 11 aufweist. Der freie Rand der Putzmembrane 5'' ist damit in sich zusätzlich verformbar mit dem Vorteil, daß Berührungen des Randes der Putzmembrane mit dem Zahnfleisch im Bereich der Zahn-Zwischenräume in schonender Weise erfolgen. Anstelle von Ausnehmungen kann der freie Rand der Putzmembrane auch auf andere Weise geschwächt sein, beispielsweise dadurch, daß er nebeneinanderliegende kurze Einschnitte aufweist. Weiterhin kann der freie Rand der Putzmembrane eine weichelastische Verdickung 5a aufweisen, wie in Fig. 5 dargestellt. Die Verdickung 5a verengt sich beim Eintauchen der Putzmembrane in einem Zahnzwischenraum und erweitert sich dann wieder bei Erreichen der Gaumenoberfläche, womit sie den dort zumeist verbreiterten Zahn-Zwischenraum gut ausfüllt.

## Patentansprüche

1. Membrane-Element mit einer Putzmembrane zum Putzen der Zahn-Zwischenräume, welches an einem Halteteil auswechselbar angeordnet werden kann, wobei
die Putzmembrane (5, 5', 5'') als eine sehr dünne, aus elastischem Material bestehende Rechteckfläche ausgebildet ist, deren einer Längsrand mit einer Basis (6) verbunden ist, die zum Anordnen an dem Halteteil ausgebildet ist, **dadurch gekennzeichnet, daß** deren Querränder (5b) zu Versteifungsstützen (9) ausgeformt sind, die vorzugsweise rechtwinklig zur Basis (6) verlaufen und in diese übergehen.

2. Membrane-Element nach Anspruch 1, **dadurch gekennzeichnet, daß** die Putzmembrane (5, 5', 5'') aus einem elastischen Kunststoff gefertigt ist und die Versteifungsstützen (9) steif-elastisch ausgebildet sind.

3. Membrane-Element nach Anspruch 1 oder 2, **dadurch gekennzeichnet, daß** die Oberflächen der Putzmembrane (5, 5', 5'') angerauht sind.

4. Membrane-Element nach einem der vorhergehenden Ansprüche, **dadurch gekennzeichnet, daß** die Oberflächen der Putzmembrane (5, 5', 5'') mit einem Putzmittel beschichtet sind.

5. Membrane-Element nach einem der vorhergehenden Ansprüche, **dadurch gekennzeichnet, daß** der freie Längsrand der Putzmembrane (5) eine weichelastische Verdickung (5a) aufweist.

6. Membrane-Element nach einem der vorhergehenden Ansprüche, **dadurch gekennzeichnet, daß** die Basis (6) einen über ihre Länge gleichmäßigen Querschnitt aufweist und daß der Halteteil (2) eine stirnseitig offene Einschiebenut (7) hat, in welche das Membrane-Element mit der Basis (6) einschiebbar und verrastbar ist.

7. Halteteil für ein Membrane-Element nach einem der vorhergehenden Ansprüche, **dadurch gekennzeichnet, daß** es mit einem Griffteil (1) verbunden ist, an dem es mit einem Schwenklager (3) nach rechts und links schwenkbar gelagert und in der jeweils eingenommenen Winkelstellung verrastbar ist.

## Claims

1. Membrane element which has a cleaning membrane for cleaning the spaces between the teeth and can be arranged in an exchangeable manner on a retaining part, the cleaning membrane (5, 5', 5") being designed as a very thin rectangular surface which consists of elastic material and of which one longitudinal border is connected to a base (6), which is formed for arranging on the retaining part, **characterized in that** the transverse borders (5b) of said rectangular surface are in the form of stiffening supports (9), which preferably run at right angles to the base (6) and merge into the latter.

2. Membrane element according to Claim 1, **characterized in that** the cleaning membrane (5, 5', 5") is produced from an elastic polymer material and the stiffening supports (9) are of rigidly elastic design.

3. Membrane element according to Claim 1 or 2, **characterized in that** the surfaces of the cleaning membrane (5, 5', 5") are roughened.

4. Membrane element according to one of the preceding claims, **characterized in that** the surfaces of the cleaning membrane (5, 5', 5") are coated with a cleaning agent.

5. Membrane element according to one of the preceding claims, **characterized in that** the free longitudinal border of the cleaning membrane (5) has a flexibly elastic thickening (5a).

6. Membrane element according to one of the preceding claims, **characterized in that** the base (6) has a cross section which is uniform over its length, and **in that** the retaining part (2) has a push-in groove (7) which is open on the end side and into which the membrane element can be pushed, by way of the base (6), and latched.

7. A retaining part for a membrane element according to one of the preceding claims, **characterized in that** it is connected to a handle part (1), on which it is mounted such that it can be pivoted to the right and left by way of a pivot bearing (3), and can be latched in the angled position which is assumed in each case.

## Revendications

1. Elément à membrane avec une membrane de détartrage pour détartrer les interstices entre les dents, qui peut être disposé de manière échangeable sur une partie de support, dans lequel la membrane de détartrage (5, 5', 5") est réalisée sous la forme d'une surface rectangulaire très mince, constituée d'un matériau élastique, dont un bord longitudinal est relié à une base (6) qui est conçue pour être placée sur la partie de support, **caractérisé en ce que** les bords transversaux (5b) de la base sont réalisés sous la forme d'appuis de rigidification (9) qui s'étendent de préférence à angle droit par rapport à la base (6) et se prolongent dans celle-ci.

2. Élément à membrane selon la revendication 1, **caractérisé en ce que** la membrane de détartrage (5, 5', 5") est fabriquée dans une matière plastique élastique et les appuis de rigidification (9) sont réalisés élastiques durs.

3. Élément à membrane selon la revendication 1 ou 2, **caractérisé en ce que** les surfaces de la membrane de détartrage (5, 5', 5") sont rendues rugueuses.

4. Élément à membrane selon l'une des revendications précédentes, **caractérisé en ce que** les surfaces de la membrane de détartrage (5, 5', 5") sont revêtues d'un produit de détartrage.

5. Élément à membrane selon l'une des revendications précédentes, **caractérisé en ce que** le bord longitudinal libre de la membrane de détartrage (5) présente une surépaisseur (5a) élastique souple.

6. Élément à membrane selon l'une des revendications précédentes, **caractérisé en ce que** la base (6) présente une section transversale régulière sur sa longueur et **en ce que** la partie de support (2) présente une rainure d'introduction (7) ouverte sur le côté frontal, dans laquelle l'élément à membrane peut être introduit et s'accrocher par la base (6).

7. Partie de support pour un élément à membrane selon l'une des revendications précédentes, **caractérisée en ce qu'**elle est reliée à une poignée (1) sur laquelle elle est montée de manière à pouvoir pivoter vers la droite et vers la gauche par un palier de pivotement (3), et peut s'encliqueter dans la position angulaire prise dans chaque cas.
